# FASCICULE DE BREVET EUROPEEN

(11) **EP 0 617 115 B1**
(45) Date de publication et mention de la délivrance du brevet: **17.06.1998**
(21) Numéro de dépôt: 94400461.3
(22) Date de dépôt: 03.03.1994
(51) Int. Cl.: C10G 33/02, B01D 17/038, B01D 17/06

(54) **Dispositif et procédé de séparation de phases de densités et de conductivités différentes par électrocoalescence et centrifugation**
Vorrichtung und Verfahren zur Trennung von Phasen unterschiedlicher Dichte und Leitfähigkeit durch Elektrokoaleszens und Zentrifugieren
Device and process for separating phases of different densities and conductivities by electrocoalescense and centrifugation

(30) Priorité: 15.03.1993 FR 9303112
(43) Date de publication de la demande: 28.09.1994
(73) Titulaire: INSTITUT FRANCAIS DU PETROLE, 92502 Rueil-Malmaison (FR)
(72) Inventeur: Prévost, Isabelle, F-78700 Conflans Sainte Honorine (FR); Rojey, Alexandre, F-92500 Rueil Malmaison (FR)

(56) Documents cités:
- EP-A- 0 072 628
- WO-A-92/05853
- FR-A- 2 663 238
- FR-A- 2 663 947
- NL-C- 662
- US-A- 4 116 790
- US-A- 4 855 066
- CHEMIE-INGENIEUR-TECHNIK vol. 62, no. 7 , Juillet 1990 , WEINHEIM, DE pages 525 - 530 DRAXLER ET AL. 'AUSLEGUNGSKRITERIEN FÜR ELEKTROSTATISCHE EMULSIONSSPALTANLAGEN'

## Description

La présente invention concerne un dispositif et un procédé pour séparer une phase continue et une phase dispersée conductrice par électrocoalescence et centrifugation.

L'invention est particulièrement bien adaptée au dessalage et à la déshydratation d'un effluent pétrolier, composé d'une phase aqueuse dispersée sous forme de gouttes et d'une phase organique continue.

Le transport du pétrole brut dans des conditions techniques et économiques satisfaisantes nécessite l'élimination, au moins en partie, de sa phase aqueuse. En effet, le transport et le traitement d'un volume de phase aqueuse représente une perte d'énergie de pompage et de chauffage des capacités. De plus, la phase aqueuse étant formée par des eaux de gisement, est constituée d'une saumure qui peut être fortement salée de salinité variable, par exemple comprise entre 10g/l et 200g/l. Lors de son passage dans les équipements de transport, de réception, de traitement et de raffinage, la phase aqueuse peut être à l'origine de dépôts de sel et de problèmes de corrosion, qui provoquent des perturbations dans toute la chaîne de traitement, et en particulier dans les unités de raffinage. Il devient donc de plus en plus important de disposer d'un procédé industriel efficace de séparation de la saumure du pétrole brut.

L'art antérieur décrit de nombreux dispositifs et procédés permettant de réaliser une telle séparation.

La technique la plus simple consiste à envoyer le mélange à séparer dans une enceinte dont le volume est calculé de manière à permettre un temps de séjour suffisant pour que l'ensemble des gouttes formant la phase dispersée aient le temps de se rassembler et de coalescer à l'interface de séparation entre les deux phases.

Cette technique couramment utilisée conduit à des installations très encombrantes et des temps de séjour pouvant être relativement importants.

Une amélioration de cette technique consiste à chauffer les enceintes contenant le mélange de façon à augmenter la vitesse de sédimentation des gouttes et leur probabilité de rencontre.

Dans les séparateurs électrostatiques utilisant ce principe, on observe parfois des phénomènes de claquage provenant d'une augmentation de la charge électrique entre les électrodes, par exemple, lors d'un alignement de gouttes conductrices dans l'alignement du champ.

D'autres technologies de séparateurs à électrodes et champ électrique sont décrites dans les brevets US-4.601.834, US-1.592.011, SU-1.568.741.

La séparation entre deux phases peut être améliorée en ayant recours à l'effet d'une accélération centrifuge, comme le décrit le brevet FR-2.663.238 du demandeur, et en favorisant la création d'un film de gouttes ayant coalescé à la surface de la pièce interne hélicoïdale du dispositif.

Le brevet US-4.116.670 décrit un dispositif qui réalise la coalescence de gouttes entre deux électrodes jusqu'à obtenir des gouttes d'une taille donnée, la séparation des gouttes étant effectuée dans un séparateur centrifuge situé après la zone du dispositif réalisant la coalescence des gouttes.

La demande du brevet FR-A-2 697 443 du demandeur décrit un dispositif utilisant les effets combinés de l'électrocoalescence due à la présence d'un champ électrique entre deux électrodes et de l'effet de centrifugation résultant de la forme des électrodes pour favoriser la séparation des phases.

Il a été découvert, et c'est l'objet de la présente invention qu'il est possible et avantageux de bénéficier de l'action simultanée d'un champ électrique et d'un effet de centrifugation pour séparer un mélange, en utilisant des électrodes de forme simple, l'effet de centrifugation étant du à l'introduction tangentielle du mélange et à son écoulement à l'intérieur d'un volume de révolution délimité par les électrodes .

Dans toute la suite du texte on définit par le terme électrode une pièce portée à un potentiel électrique.

La présente invention concerne un procédé pour séparer un mélange composé d'au moins une phase continue I et d'au moins une phase conductrice II dispersée sous forme de particules telles que des gouttes dans la phase continue, les deux phases étant de densité différentes l'une de l'autre, dans lequel on envoie le mélange à séparer dans au moins une zone annulaire, ladite zone annulaire étant délimitée par au moins deux pièces sensiblement cylindriques imbriquées l'une dans l'autre, on applique une différence de potentiel entre lesdites deux pièces sensiblement cylindriques de manière à créer un champ électrique radial dans la zone annulaire. Il est caractérisé en ce que simultanément à l'application de la différence de potentiel entre les deux pièces cylindriques permettant de favoriser la coalescence des particules de la phase dispersée II, on introduit le mélange vers la périphérie d'au moins une des pièces sensiblement cylindriques de manière tangentielle pour communiquer un mouvement de rotation au fluide dans la zone annulaire et obtenir une force centrifuge, permettant de séparer au moins partiellement les particules coalescées de la phase continue sous l'effet de la force centrifuge régnant à l'intérieur de la zone annulaire, la phase continue et la phase dispersée comportant les particules ayant coalescé, étant collectées séparément à l'extérieur de la zone annulaire.

On introduit par exemple le mélange de manière tangentielle à la périphérie d'au moins une des pièces sensiblement cylindriques.

On peut faire circuler le mélange à séparer dans une pluralité de zones annulaires situées entre des électrodes tubulaires coaxiales .

On peut injecter le mélange simultanément dans plusieurs zones annulaires.

On peut aussi faire circuler le mélange à séparer successivement dans différentes zones annulaires .

On fait circuler, par exemple, le mélange à séparer dans la première zone annulaire délimitée par une pièce tubulaire externe et une pièce tubulaire interne, les deux pièces étant sensiblement coaxiales, où il subit une première séparation au cours de laquelle les particules ayant partiellement coalescé s'agglomèrent vers la périphérie de la pièce tubulaire externe, la phase continue partiellement séparée passant dans une deuxième zone annulaire délimitée par la pièce tubulaire interne et une électrode centrale, dans une direction globalement opposée à la direction de circulation du mélange dans la première zone, les particules restantes coalesçant au cours de la circulation de ladite phase partiellement séparée dans la deuxième zone annulaire s'agglomérant sur la paroi interne de la pièce tubulaire interne, les particules ayant coalescé sur les parois internes de la pièce tubulaire externe et de la pièce tubulaire interne étant drainées vers la partie inférieure du dispositif alors que le reste de la phase continue est évacué par le conduit.

Le procédé peut comporter plusieurs étapes de séparation du mélange s'effectuant en série, chacune de ces étapes permettant de séparer une fraction de la phase dispersée contenue sous forme de gouttes au départ dans le mélange.

On applique, par exemple, entre les pièces ou électrodes délimitant une zone annulaire une différence de potentiel continue pour générer le champ électrique.

On peut aussi appliquer entre les pièces ou électrodes délimitant une zone annulaire une différence de potentiel alternative pour générer le champ électrique, ou une différence de potentiel de signe constant et variant de manière périodique.

La valeur de crête du champ électrique établi au sein d'une zone annulaire peut être comprise entre 3.10⁴ et 6.10⁵ V/m.

La vitesse moyenne d'écoulement du mélange à séparer dans une zone annulaire est comprise de préférence entre 1 et 10 m/s.

Les particules de phase dispersée ayant partiellement coalescé, sortant de chaque zone annulaire sont, par exemple, séparées de la phase continue par centrifugation statique.

L'invention concerne aussi un dispositif pour séparer un mélange composé d'au moins une phase continue I et d'au moins une phase conductrice II dispersée sous forme de particules telles que des gouttes dans une phase continue, les deux phases ayant des densités différentes l'une de l'autre, comportant au moins deux pièces sensiblement cylindriques, imbriquées l'une dans l'autre et délimitant entre elles une zone annulaire, des moyens pour appliquer entre les deux pièces sensiblement cylindriques une différence de potentiel capable de provoquer la coalescence des particules de la phase dispersée II. Il est caractérisé en ce qu'il comporte des moyens d'introduction tangentiels du mélange à séparer à la périphérie d'au moins une des pièces cylindriques, disposés de manière à communiquer au mélange un mouvement de rotation et créer une force centrifuge, des moyens de réception et de décantation, lesdits moyens de réception et de décantation étant distincts de la zone annulaire, des moyens d'évacuation de la phase continue et des particules coalescées et séparées à l'intérieur desdits moyens de réception et de décantation.

Les moyens d'évacuation de la phase continue et de la phase conductrice dispersée partiellement séparées sont situés à des positions différentes.

Les pièces sensiblement cylindriques comportent, par exemple, une pièce tubulaire externe et une pièce interne, lesdites pièces étant coaxiales.

La pièce interne peut être une pièce tubulaire formant un conduit permettant l'évacuation de la phase continue .

L'électrode cylindrique interne est recouverte d'un matériau isolant tel qu'un polymère.

Le dispositif peut comporter une pluralité de pièces coaxiales jouant le rôle d'électrodes délimitant une pluralité de zones annulaires et des moyens pour appliquer entre deux quelconques électrodes adjacentes délimitant une zone annulaire une différence de potentiel capable de provoquer la coalescence des gouttes de la phase conductrice dispersée.

Le dispositif peut comporter des moyens d'introduction en parallèle du mélange à séparer dans les zones annulaires, lesdits moyens étant situés en périphérie de chacune des zones annulaires et selon une direction sensiblement tangente à la périphérie de chacune des zones annulaires, et à une même extrémité du dispositif.

La sortie d'une zone annulaire communique, par exemple, avec l'entrée de la zone annulaire adjacente suivante de manière à ce que le mélange à séparer parcourt les zones annulaires successives en série, les unes après les autres.

On peut disposer une grille à proximité de la paroi interne de la pièce interne de manière à stabiliser le film formé de gouttes ayant coalescé sur ladite paroi.

Les moyens de réception et de séparation peuvent comporter une pièce conique à l'intérieur de laquelle la phase formée par les particules ayant coalescé entraînée par la phase continue, est séparée par centrifugation hydrocyclonique.

Le dispositif peut comporter un moyen de détection de l'interface entre les phases partiellement séparées, de manière à maintenir le niveau de l'interface entre deux valeurs données.

Le procédé et le dispositif selon l'invention s'appliquent particulièrement bien à la séparation d'un mélange tel qu'un effluent pétrolier contenant une phase aqueuse dispersée et une phase organique continue et/ou au dessalage de pétrole brut comportant l'addition d'eau relativement peu salée.

Un des avantages de la présente invention est de minimiser les phénomènes de chaînage des gouttes entre deux électrodes voisines ou adjacentes du fait que ces gouttes sont éloignées sous l'action de la force centrifuge d'une des deux électrodes. On réduit ainsi les risques de claquage dus à l'alignement des gouttes entre deux électrodes successives.

Un autre avantage est d'augmenter l'efficacité de la séparation par une utilisation optimale du volume de traitement où l'on combine le phénomène d'électrocoalescence et l'effet centrifuge.

D'autres caractéristiques et avantages de la présente invention apparaîtront à la lecture de la description ci-après en se référant aux figures annexées pour lesquelles :
- les figures 1A et 1B montrent schématiquement un dispositif de séparation selon l'invention et vu de dessus les conduits d'introduction tangentielle du mélange,
- les figures 2A et 2B montrent schématiquement un dispositif permettant une séparation plus fine du mélange,
- les figures 3A et 3B schématisent des modes de réalisation du dispositif comportant plusieurs zones annulaires de séparation par électrocoalescence et centrifugation, en parallèle et en série,
- les figures 4A et 4B montrent une variante du dispositif comportant des zones annulaires de séparation ayant une forme en spirale,
- la figure 5 schématise un dispositif comportant une zone de séparation hydrocyclonique disposée après la zone de séparation par électrocoalescence et centrifugation,
- la figure 6 montre un dispositif de séparation constitué de deux éléments de séparation,
- la figure 7A schématise un mode d'association possible de plusieurs dispositifs selon l'invention, et
- la figure 7B est une coupe du dispositif suivant l'axe B-B de la figure 7A et la figure 7C est une vue de dessus de l'ensemble.

Le dispositif qui va être décrit ci-après permet de séparer un mélange comportant une phase dispersée conductrice sous forme de gouttes et une phase continue en utilisant les effets combinés d'électrocoalescence et de centrifugation obtenue par une introduction tangentielle du mélange dans une enceinte de séparation, de manière à ce que gouttes de la phase dispersée ayant coalescé se regroupent vers la périphérie de l'enceinte, conduisant à une séparation au moins partielle des deux phases.

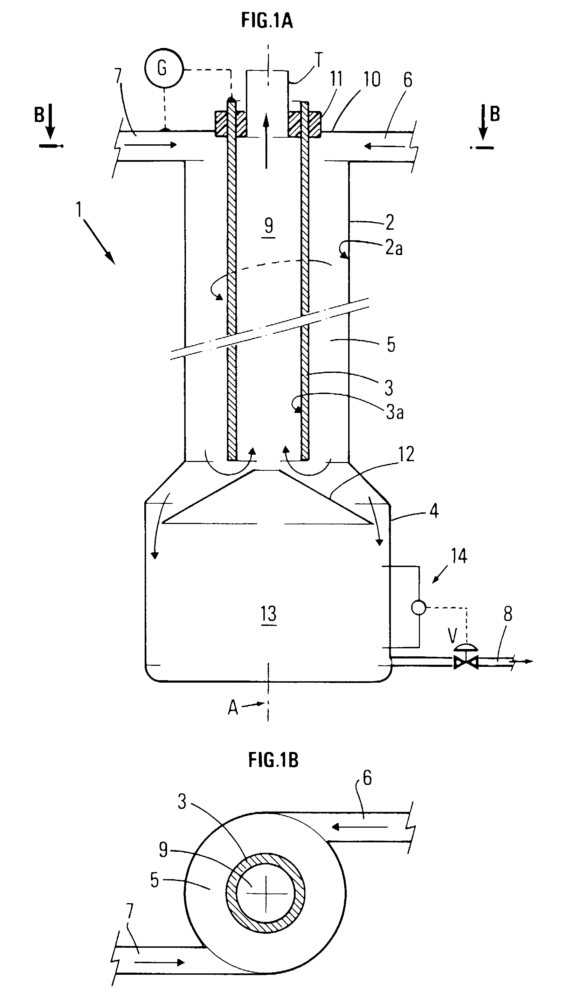

La figure 1A représente un exemple d'un tel dispositif qui comporte une enceinte 1 ayant un axe A comprenant une partie sensiblement cylindrique 2 jouant le rôle de pièce tubulaire externe dans laquelle est disposée une pièce tubulaire interne 3, les deux pièces étant de préférence coaxiales et une zone de décantation et de réception 4 prolongeant la zone cylindrique 2. La pièce tubulaire interne 3, a de préférence une longueur au plus égale à la longueur de la zone cylindrique 2, la partie cylindrique 2 de l'enceinte et la pièce tubulaire interne 3 délimitant une zone annulaire 5 de séparation par électrocoalescence et centrifugation. Il comporte en outre deux conduits d'introduction 6, 7 (FIG.1B) du mélange à séparer disposés de manière tangentielle et situés dans la partie supérieure de l'enceinte. L'enceinte comporte aussi des conduits d'évacuation 8, 9 respectivement de la phase formée des gouttes ayant coalescé et de la phase continue, le conduit d'évacuation 9 correspond dans ce mode de réalisation à la partie creuse de la pièce interne 3.

L'enceinte 1 est fermée à sa partie supérieure par un couvercle 10 dans lequel est engagée la pièce interne 3. Le couvercle 10 est pourvu d'un orifice faisant communiquer le conduit 9 avec un tube extérieur d'évacuation T. Le couvercle 10 et la pièce interne 3 sont isolées électriquement par un joint isolant 11.

L'enceinte 1 et la pièce interne 3 sont mises en contact avec les bornes d'un dispositif, tel qu'un générateur électrique G à haute tension, alimenté par le secteur et piloté par un générateur de fonction, permettant de porter la pièce interne 3 à une valeur de potentiel donnée alors que l'enceinte 1 est, de préférence, mise à la terre.

Dans la zone 4 de réception de l'enceinte on dispose une pièce 12 conique qui permet de créer une zone dite de calme 13 où une interface entre la phase dispersée ayant coalescé et la phase continue peut être stabilisée à l'aide d'un détecteur de niveau 14 bien connu des spécialistes, relié au conduit d'évacuation 8 par une vanne V, permettant de réguler le débit des gouttes ayant coalescé afin de maintenir l'interface existant entre les gouttes ayant coalescé et la phase continue à une distance donnée de la zone où est réalisée la séparation par électrocoalescence et centrifugation. En sortie de la zone annulaire, par suite des effets combinés de l'electrocoalescence et de centrifugation, la phase continue, de densité inférieure à la phase dispersée, est rassemblée autour de la pièce centrale et pénètre à l'intérieur de cette pièce dans le conduit 9 puis est évacuée par le tube T. La pièce conique 12 permet, lors de l'extraction de la phase continue par le conduit 9, de limiter les zones de turbulence et de redispersion des phases au moins partiellement séparées.

Le but du dispositif 14 est de maintenir le niveau de l'interface entre deux valeurs données, l'une étant située, par exemple, au-dessus du conduit 8 et l'autre en dessous de la zone où est réalisé la séparation par électrocoalescence et centrifugation.

Dans le cas où le mélange est constitué d'une saumure fortement conductrice, la pièce interne 3, jouant le rôle d'électrode portée à une valeur de tension élevée, est revêtue d'une couche de polymère isolant par des méthodes connues de l'homme de l'art. Les choix du matériau isolant, et de son épaisseur sont bien connus des spécialistes et dépendent du mélange à séparer.

Ce mode de réalisation permet d'éviter les phénomènes de claquage résultant notamment de courts circuits locaux lorsque l'on élève la valeur du champ électrique.

La différence de potentiel appliquée entre la pièce interne et l'enceinte est différente selon les cas.

On applique une force électromotrice (fem) continue entre deux pièces délimitant une zone annuaire quand on cherche à séparer un mélange pour lequel la phase dispersée conductrice se présente sous la forme d'une émulsion peu concentrée au sein d'une phase continue peu conductrice.

Pour séparer des mélanges constitués d'émulsions relativement concentrées, il est plus avantageux d'utiliser des sources de tension variables, générant une tension alternative ou une force électromotrice pulsée ou impulsionnelle, constamment de même signe, par exemple.

La valeur de la fréquence et l'intensité de la force électromotrice utilisée est choisie en fonction de la nature du mélange à séparer et du type des pièces jouant le rôle d'électrodes dans le dispositif.

Les valeurs des fréquences varient par exemple entre 0,1 et 100 Hz, et de préférence, sont de l'ordre de 50 à 60 Hz. Afin d'améliorer la séparation on peut utiliser une fréquence supérieure à 100 Hz tout en restant inférieure à 1000 Hz pour éviter de redisperser les gouttes ayant coalescé. L'intensité du champ électrique varie, par exemple, entre 3.10⁴ et 6.10⁵ V/m.

On choisit la vitesse moyenne de circulation du mélange de manière à obtenir une force centrifuge permettant de séparer les gouttes ayant coalescé du mélange initial, la valeur de cette vitesse dans une zone annulaire est de préférence comprise entre 1 et 10m/s. De cette façon on obtient une accélération centrifuge comprise par exemple entre 10 g et 500 g, g étant l'accélération de la pesanteur.

Le temps de séjour du mélange dans l'enceinte dépend du degré de séparation du mélange souhaité et de la stabilité du mélange à séparer. Il est par exemple, compris entre quelques dizaines de secondes et plusieurs minutes.

Une possibilité d'utilisation du dispositif selon l'invention consiste à introduire le mélange à séparer comprenant la phase continue et la phase conductrice dispersée sous forme de gouttes par les conduits 6, 7, la densité de la phase dispersée étant, dans cet exemple, supérieure à la densité de la phase continue. Le mélange est introduit avec une vitesse suffisante pour communiquer au mélange un mouvement de rotation favorisant la séparation des deux phases. On applique une différence de potentiel entre la pièce interne 3 et l'enceinte 1, jouant ainsi le rôle d'électrodes, cette tension générant un champ électrique radial de direction sensiblement perpendiculaire aux électrodes dans la zone annulaire 5 de circulation du mélange à séparer. Sous l'action conjointe du champ électrique et de la force centrifuge, les gouttes de la phase dispersée coalescent et s'agglomèrent progressivement au cours de l'écoulement du mélange dans la zone annulaire. Au cours de l'écoulement du mélange les gouttes de phase dispersée de densité plus élevée ayant coalescé, plus sollicitées par la force centrifuge résultant du mouvement de rotation sont déplacées vers la périphérie du dispositif, c'est-à-dire vers la périphérie de l'enceinte 1 où elles s'accumulent et forment, par exemple, un film sur la paroi interne 2a de l'enceinte de la zone cylindrique 2. Le mélange partiellement séparé en sortie de la zone annulaire pénètre ensuite dans la zone 4 de l'enceinte. Les gouttes ayant coalescé, s'écoulent, par exemple, sous forme d'un film le long de la zone cylindrique 2 par l'effet de leur propre poids et/ou par entrainement pour être ensuite récupérées dans la zone de réception 4 de l'enceinte et évacuées par le conduit 8.

La phase continue de densité inférieure est récupérée dans la partie haute de la zone de réception 4 au dessus de la pièce conique 12 pour être ensuite évacuée par le conduit 9 et le tube T.

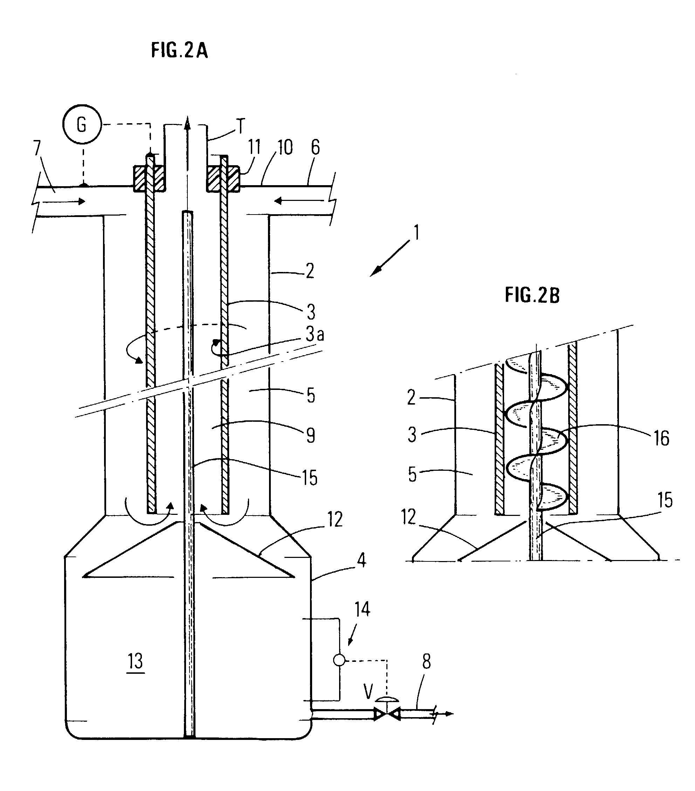

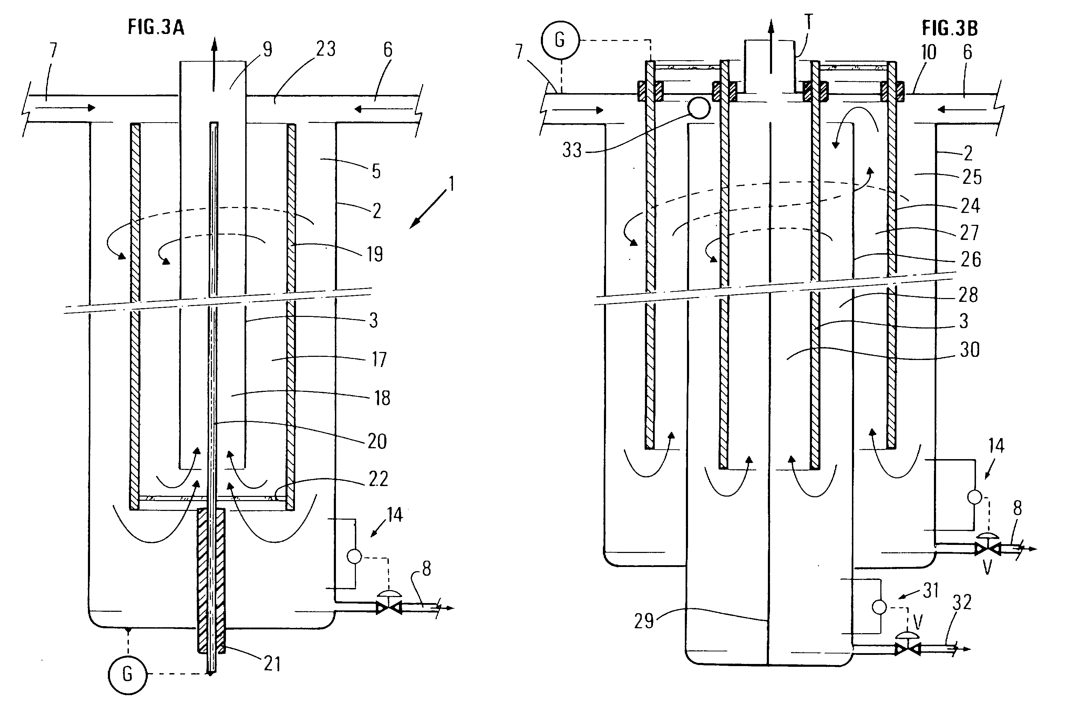

Les figures 2A, 2B et 3A, 3B montrent des variantes du dispositif selon l'invention permettant d'obtenir une séparation plus poussée du mélange.

Le dispositif représenté sur la figure 2A comporte une électrode cylindrique 15 disposée de façon coaxiale à l'intérieur du conduit d'extraction 9 de la phase continue. Cette électrode 15 est reliée électriquement à l'enceinte 1. L'intensité du champ électrique radial régnant à l'intérieur du conduit 9 est définie par le diamètre interne de la pièce tubulaire 3 et le diamètre externe de l'électrode 15. Ce champ permet aux gouttes de la phase dispersée entraînées dans la phase continue après l'étape de séparation réalisée dans la zone annulaire 5 de coalescer entre elles et, sous l'effet de la force centrifuge d'être séparées de la phase continue par migration vers la paroi interne de la pièce tubulaire 3 sur laquelle elles forment, par exemple, un film avant de s'écouler vers le bas de l'enceinte sous l'effet de la gravité. On obtient ainsi une séparation poussée des dernières gouttelettes de la phase dispersée conductrice entraînées dans la phase continue en sortie de la zone annulaire 5.

Les gouttes de la phase dispersée entraînées avec la phase continue ayant une concentration plus faible que celles du mélange initial, l'écartement entre les électrodes 3 et 15 est, de préférence, inférieur à celui de la pièce tubulaire 3 et de l'enceinte 1 de manière à avoir un champ électrique dans le conduit 9 plus intense que le champ de la zone annulaire 5.

Afin de faciliter le drainage des gouttes le long de la paroi interne 3a de la pièce tubulaire 3, l'écoulement des gouttes se faisant à contre courant de l'évacuation de la phase continue, la paroi interne 3a de l'électrode peut être striée. Elle comporte ainsi des rainures verticales, ou est revêtue de fibres hydrophiles ou d'une grille jouant le même rôle que les rainures, ces différents exemples n'étant pas représentés sur la figure. De cette manière on obtient une zone dans laquelle le cisaillement est réduit, et qui permet un écoulement du film formé par les gouttes ayant coalescé en minimisant les risques de redispersion.

Le conduit 9 peut comporter une pièce hélicoïdale 16 (FIG. 2B), non conductrice, permettant d'accentuer le mouvement de rotation que possède le mélange en sortie de la zone annulaire 5 et pénétrant dans le conduit 9. Cette pièce est, par exemple, positionnée à partir de l'extrémité inférieure du conduit 9, sa longueur pouvant être égale à une partie de la longueur du conduit ou à la longueur totale du conduit.

Dans la variante représentée sur la figure 3A, on obtient une séparation plus fine en faisant passer le mélange dans plusieurs zones annulaires coaxiales.

L'enceinte 1 comporte trois zones ou espaces annulaires coaxiaux 5, 17 et 18 délimités respectivement par la partie cylindrique 2 de l'enceinte 1 et une pièce interne 19 concentrique jouant le rôle d'électrode, par l'électrode 19 et par la pièce tubulaire 3 et, par la pièce tubulaire 3 et une électrode cylindrique 20 centrale située à l'intérieur du conduit d'évacuation 9 et isolée de l'enceinte 1 par une pièce isolante 21 évitant ainsi les court-circuits entre l'électrode 20 et la partie cylindrique 2 de l'enceinte. Les électrodes 19, 20 sont en contact électrique et reliées à la borne haute tension du générateur de tension G alors que la pièce tubulaire 3 et l'enceinte 1 sont reliées à l'autre borne du générateur. De cette façon deux électrodes adjacentes sont portées à un potentiel électrique différent de manière à créer un champ électrique sensiblement radial dans les zones annulaires 5, 17 et 18. L'électrode 19 est reliée électriquement à l'enceinte 1 par des pièces 22, telles que des barrettes de positionnement, cette liaison permettant de plus le maintien de l'électrode 19 dans l'enceinte 1.

Le mélange à séparer est introduit de manière identique aux modes de réalisation précédemment décrits par les conduits tangentiels 6, 7 et pénètre dans une zone de distribution 23 située dans la zone supérieure de l'enceinte 1 à partir de laquelle le mélange se répartit dans les zones annulaires 5 et 17 et s'écoule avec un mouvement de rotation du fait de son introduction tangentielle dans l'enceinte. De manière identique aux exemples précédents, les gouttes ayant coalescé dans les zones 5 et 17, sont évacuées au moins en partie par le conduit 8, tandis que le mélange constitué principalement de phase continue provenant des zones 5 et 17 passe dans la zone annulaire 18 dans laquelle il subit une dernière étape de séparation grâce à l'action combinée de la force centrifuge et du champ électrique régnant dans cette zone. Les dernières gouttes coalescent et s'écoulent le long de la paroi interne de la pièce 3 avant d'être évacuées par le conduit 8. La phase continue, du fait de sa densité inférieure à la densité du mélange présent dans la zone annulaire 5, est évacuée par le conduit 9.

On peut accentuer le mouvement de rotation en mettant à l'intérieur du conduit 9 autour de l'électrode 20 une pièce hélicoïdale semblable à la pièce 16 de la figure 2A.

L'écartement entre les électrodes est choisi en fonction de la concentration des gouttes de la phase dispersée dans le mélange à séparer ou dans la phase continue partiellement séparée. Ainsi l'écartement entre les électrodes 3 et 20 est inférieur à celui existant entre les électrodes 2 et 19 ou entre les électrodes 3 et 19.

Ce mode de réalisation utilisant l'alimentation en parallèle de plusieurs zones annulaires permet de faire varier l'intensité du champ électrique dans les différentes zones annulaires, les conditions électriques et hydrodynamiques étant égales par ailleurs.

Dans le mode de réalisation de la figure 3B, l'enceinte comporte plusieurs zones annulaires disposées de façon à ce que la sortie d'une zone annulaire communique avec l'entrée de la zone annulaire suivante. De cette manière, le mélange parcourt les zones en série, les unes à la suite des autres.

Le dispositif comporte une pièce interne cylindrique concentrique 24 reliée au couvercle 10 supérieur de l'enceinte 1 et délimitant avec cette dernière une première zone annulaire 25, une seconde pièce en forme de tube cylindrique fermé à son extrémité inférieure 26, située à l'intérieur de la pièce 24 et concentrique à cette dernière, créant une deuxième zone annulaire 27 avec la pièce 24, la sortie de la zone annulaire 25 communiquant avec l'entrée de la zone 27. La pièce tubulaire 3 positionnée à l'intérieur du tube 26 crée une troisième zone annulaire 28 consécutive à la zone 27 et enfin, une électrode centrale 29 positionnée à l'intérieur de la pièce tubulaire 3 et reliée à l'extrémité inférieure du tube 26 délimite une quatrième zone annulaire 30 consécutive à la zone 28. La partie inférieure du tube 26 débouche de l'enceinte 1 de manière à créer une zone d'évacuation des gouttes ayant coalescé. Elle est équipée d'un dispositif de détection de niveau d'interface 31, identique au dispsoitif 14, relié à une vanne V de réglage de débit décrite Fig.1A située sur un conduit d'évacuation 32.

Les pièces cylindriques 3 et 24 sont reliées à la borne de haute tension du générateur G, alors que l'enceinte 1 et les pièces 26 et 29 sont reliées à l'autre borne du générateur de manière à créer dans les zones annulaires 25, 27, 28 et 30 un champ électrique favorisant la coalescence des gouttes de la phase dispersée.

Le mélange à séparer introduit par les conduits tangentiels 6, 7 parcourt les zones 25, 27, 28 et 30 les unes à la suite des autres, en série. Au fur et à mesure de son écoulement dans les différentes zones annulaires, l'effet conjugué des champs électriques et de la force centrifuge conduit à la coalescence des gouttes de la phase dispersée et à la séparation de plus en plus fine des gouttes ayant coalescé de la phase continue. Les gouttes de la phase dispersée coalescent et migrent vers la périphérie des zones annulaires, puis s'écoulent le long des parois des pièces délimitant ces zones annulaires, par exemple sous forme d'un film,vers l'extrémité inférieure de l'enceinte 1 où elles sont évacuées par les conduits 8 et 32.

Ce mode de réalisation est plus particulièrement adapté pour des opérations industrielles de dessalage qui opèrent en plusieurs étapes de séparation allant de la séparation grossière à la séparation plus fine. Les zones 25 et 27 sont des zones de séparation dite grossière, les gouttes saturées en sel ayant coalescé, sont évacuées par le conduit 8. La phase continue contenant des gouttes de la phase dispersée n'ayant pas coalescé, ou insuffisamment pour être séparées, pénètre dans la zone 28 où elle est remélangée avec de l'eau de dilution peu salée, introduite de manière tangentielle par le conduit d'introduction 33. Le nouveau mélange ainsi formé passe ensuite dans les zones annulaires 28 et 30, dans lesquels il est progressivement séparé et de cette façon dessalé. Les gouttes ayant coalescé dans les zones 28 et 30 sont recueillies dans la partie inférieure du tube 26 et évacuées par le conduit 32 .

Les débits des conduits d'évacuation 8 et 32 des gouttes ayant coalescé sont assujettis de préférence à un contrôle de niveau à l'aide des dispositifs 14, 31 bien connus des spécialistes.

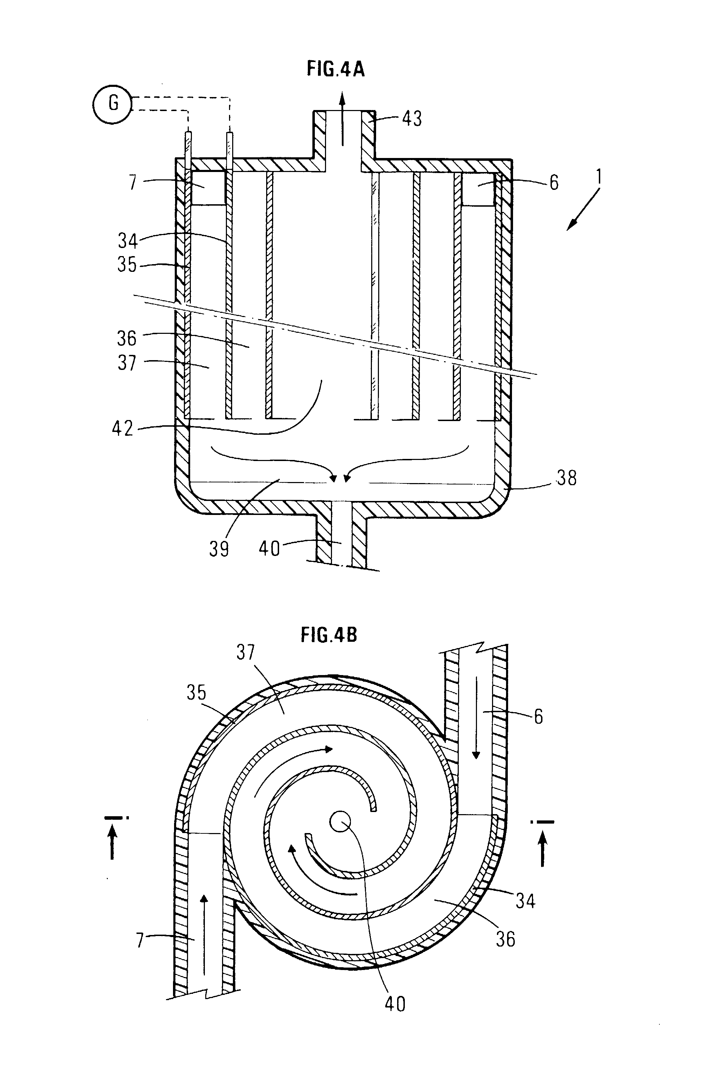

Le dispositif représenté à la figure 4A comporte deux pièces internes jouant le rôle d'électrodes 34, 35 et ayant une forme en spirale imbriquées l'une dans l'autre et coaxiales à l'enceinte isolante 38. Les deux pièces sont portées à un potentiel électrique différent et délimitent ainsi deux zones annulaires 36, 37 (FIG.4B) dans lesquelles règne un champ électrique radial de même intensité. L'enroulement de ces pièces est réalisé de telle sorte que les électrodes 34, 35 ne soient pas en contact.

Le mélange à séparer est introduit tangentiellement à l'enceinte par les conduits 6, 7 qui aboutissent respectivement dans les zones annulaires 36, 37. L'enroulement des pièces et l'introduction tangentielle du mélange confère au mélange une vitesse de rotation importante. Sous l'effet combiné du champ électrique et de la force centrifuge, les gouttes de la phase dispersée ont tendance à coalescer et à migrer vers la périphérie des zones annulaires, la paroi interne de l'électrode 34 pour la zone 36 et la paroi interne de l'électrode 35 pour la zone 37. Les gouttes ayant coalescé forment, par exemple, un film sur la surface des électrodes qui est drainé par gravité vers l'extrémité inférieure de l'enceinte 1 dans la zone 39, le film étant ensuite évacué par un conduit 40 situé à l'extrémité inférieure de l'enceinte 1. La partie de la phase continue, appauvrie en phase dispersée du fait de l'effet centrifuge s'écoule dans les zones annulaires 36, 37 puis dans la zone 42, délimitée par les pièces 34 et 35, avant d'être évacuée par le conduit 43 situé dans la partie centrale supérieure de l'enceinte.

Ce type de configuration favorise le drainage continu des particules ayant coalescé vers la zone 39 dite "zone calme" et diminue ainsi les risques de réentraînement des gouttes ayant coalescé avec la phase continue.

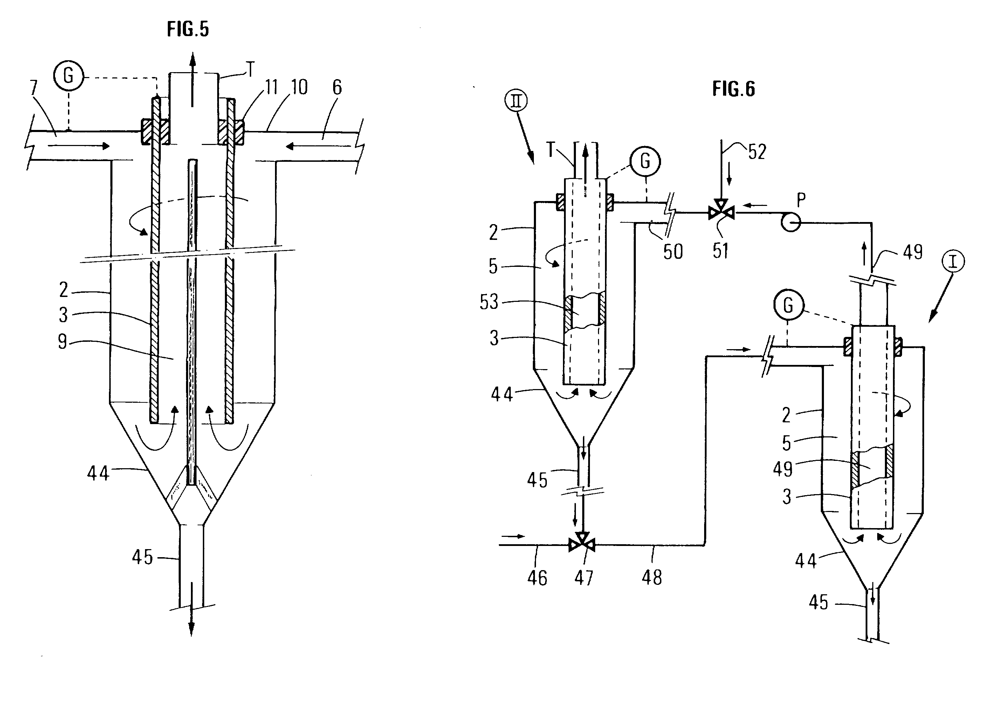

Dans le mode de réalisation de la figure 5, l'évacuation des phases partiellement séparées après leur passage dans une zone annulaire, est réalisée de manière plus efficace par un effet de centrifugation hydrocyclonique.

La zone 4 de l'enceinte 1 de la figure 1 a été remplacée par une pièce de forme conique 44 prolongée par un conduit d'évacuation 45. La forme conique de la pièce 44 permet au mélange situé dans cette zone et constitué principalement des gouttes ayant coalescé de conserver son mouvement de rotation jusqu'à son extraction par le conduit 45. Les proportions de la pièce 44 sont identiques ou similaires, par exemple, aux proportions des hydrocyclones bien connues des spécialistes.

La figure 6 montre un mode de réalisation du dispositif selon l'invention combinant en série deux dispositifs I et II, tels que ceux de la figure 5, plus particulièrement adapté à la séparation en deux étapes d'un mélange.

On peut ainsi réaliser le dessalage d'un effluent pétrolier ou "brut" constitué d'une phase continue telle que de l'huile et d'une phase aqueuse se présentant sous la forme dispersée de gouttes. Les dispositifs I et II sont reliés entre eux par des canalisations et des vannes décrits par la suite.

Le brut à séparer est introduit par le conduit 46 et peut être mélangé à de l'eau provenant, par exemple, du dispositif II à l'aide d'une vanne de mélange 47. Le nouveau mélange eau, brut pénètre dans le dispositif I de manière tangentielle par le conduit 48 où il est séparé au moins partiellement, les gouttes saturées en sel ayant coalescé étant évacuées par le conduit 45 situé dans la partie hydrocyclonique du dispositif et la phase continue étant évacuée par un conduit 49 correspondant à l'intérieur de la pièce tubulaire 3 et relié au conduit d'introduction 50 du dispositif II. La phase continue contenant encore des gouttes n'ayant pas, ou insuffisamment coalescé, dans le dispositif I passe dans un second dispositif II par un conduit 50 équipé d'une vanne de mélange 51. Elle est alors mélangée à de l'eau provenant d'une source d'eau très peu chargée en sels non représentée sur la figure par un conduit 52 et la vanne 51. Cette introduction d'eau permet de diluer les sels dissous. Le nouveau mélange pénètre dans le dispositif II de manière à réaliser la séparation des gouttes résiduelles et des nouvelles gouttes d'eau provenant de la source d'eau. La séparation se fait de manière identique aux modes de réalisation précédemment décrits. La phase continue étant évacuée par le conduit 53 correspondant à la partie creuse de la pièce tubulaire 3 et les gouttes ayant coalescé sont évacuées par le conduit 45.

Dans un mode de réalisation préférentiel, le fonctionnement des séparateurs est ajusté de manière à ce que le champ électrique soit moins élevé dans le premier dispositif I que dans le second, du fait de la concentration plus importante et du plus grand diamètre des gouttes de la phase dispersée dans le mélange à séparer et à ce que le taux de soutirage soit suffisamment faible pour limiter l'entraînement de l'huile dans le conduit d'évacuation de la phase aqueuse. La valeur de l'intensité du champ électrique régnant dans la zone annulaire 5 du dispositif II est choisie plus élevée que celle du dispositif I du fait de la concentration et du diamètre plus faible des gouttes de la phase dispersée, le mélange ou saumure étant moins salé. Le taux de soutirage dans ce dispositif doit être suffisamment élevé pour éviter l'entraînement de la phase aqueuse par la phase continue évacuée par le conduit 53.

Dans le cas où la pression du mélange introduit dans le dispositif I est trop faible, une pompe P, placée sur le conduit 50, est nécessaire pour assurer une vitesse d'injection suffisante du mélange dans le dispositif II.

Dans le cas où la phase riche en eau extraite du dispositif II par le conduit 45 est recirculée vers l'alimentation du dispositif I, la pompe sert à égaliser la pression du mélange provenant du conduit 45 du second dispositif II à la pression du mélange circulant dans la conduite 46.

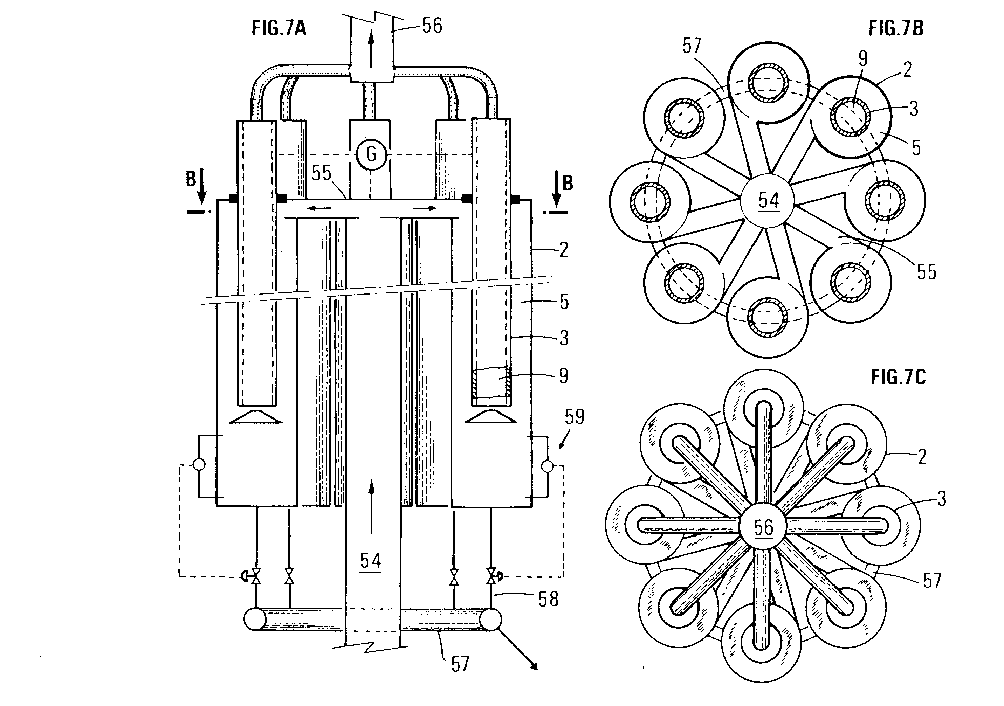

Les figures 7A, 7B, et 7C représentent un exemple d'association en parallèle de plusieurs dispositifs, décrits précédemment, adaptée aux capacités de traitement industrielles. La figure 7A montre la disposition des séparateurs assemblés en faisceaux verticaux comportant 8 éléments (figures 7B, 7C) alimentés par le conduit central 54. Ce conduit débouche dans un répartiteur 55, qui permet d'introduire de manière identique et tangentielle le mélange à séparer dans chacune des zones annulaires 5 des éléments de séparation. L'huile ou phase continue est évacuée par des conduits 9 verticaux qui se rassemblent dans un conduit collecteur 56. La phase aqueuse constituée principalement des particules ayant coalescé est évacuée par des conduits 57 et 58 en contrôlant le niveau à l'aide d'un dispositif 59 de type identique aux dispositifs 14 relié de la même façon à une vanne V (FIG.1A).

On ne sortira pas du cadre de l'invention en remplaçant la pièce interne tubulaire 3 par une pièce pleine jouant le même rôle L'évacuation de la phase continue se fait alors par un conduit disposé dans la zone de réception et situé au-dessus du tube 8 d'évacuation des gouttes de la phase ayant coalescé.

La pièce 3 peut être entrainée en rotation par rapport à l'enceinte 1. Ce mouvement de rotation présente l'avantage d'accentuer le mouvement de rotation du mélange dans la zone formée par le conduit 9 et aussi d'augmenter la force centrifuge dans la zone annulaire 5. Le sens de rotation de la pièce 3 par rapport à la pièce 1 est identique au sens d'introduction du mélange et au sens du mouvement qu'il possède dans la zone 5.

Afin d'améliorer la séparation et d'obtenir une séparation plus poussée du mélange, dite aussi séparation secondaire, on peut utiliser différentes techniques connues de l'homme de l'art, telles que l'interception des gouttes, l'adsorption de ces goutes sur un matériau de type poreux hydrophile,... .

Bien entendu, diverses modifications et/ou adjonctions peuvent être apportées par l'homme du métier au procédé et au dispositif dont la description vient d'être donnée à titre nullement limitatif, sans sortir du cadre de l'invention.

## Revendications

1. Procédé pour séparer un mélange composé d'au moins une phase continue (I) et d'au moins une phase conductrice (II) dispersée sous forme de particules telles que des gouttes dans la phase continue, les deux phases étant de densité différentes l'une de l'autre, dans lequel on envoie le mélange à séparer dans au moins une zone annulaire (5), ladite zone annulaire étant délimitée par au moins deux pièces sensiblement cylindriques (1, 3) imbriquées l'une dans l'autre, on applique une différence de potentiel entre lesdites deux pièces sensiblement cylindriques (1, 3) de manière à créer un champ électrique radial dans la zone annulaire (5), caractérisé en ce que simultanément à l'application de la différence de potentiel entre les deux pièces cylindriques permettant de favoriser la coalescence des particules de la phase dispersée (II), on introduit le mélange vers la périphérie d'au moins une des pièces sensiblement cylindriques de manière tangentielle pour communiquer un mouvement de rotation au fluide dans la zone annulaire et obtenir une force centrifuge, permettant de séparer au moins partiellement les particules coalescées de la phase continue sous l'effet de la force centrifuge régnant à l'intérieur de la zone annulaire, la phase continue et la phase dispersée comportant les particules ayant coalescé, étant collectées séparément à l'extérieur de la zone annulaire.

2. Procédé selon la revendication 1 caractérisé en ce que l'on introduit le mélange de manière tangentielle à la périphérie d'au moins une des pièces sensiblement cylindriques.

3. Procédé selon la revendication 1, caractérisé en ce que l'on fait circuler le mélange à séparer dans une pluralité de zones annulaires situées entre des pièces tubulaires coaxiales.

4. Procédé selon la revendication 3, caractérisé en ce que l'on injecte du mélange simultanément dans plusieurs zones annulaires.

5. Procédé selon la revendication 3, caractérisé en ce que l'on fait circuler le mélange successivement dans différentes zones annulaires.

6. Procédé selon la revendication 5, caractérisé en ce que l'on fait circuler le mélange à séparer dans ladite première zone annulaire (5) délimitée par une pièce tubulaire externe (1) et une pièce tubulaire interne (3), lesdites pièces étant sensiblement coaxiales où il subit une première séparation au cours de laquelle les particules ayant partiellement coalescé s'agglomèrent vers la périphérie de la pièce tubulaire externe (1), la phase continue partiellement séparée passe dans une deuxième zone annulaire délimitée par la pièce tubulaire (3) et une électrode centrale, dans une direction globalement opposée à la direction de circulation du mélange dans la première zone (5), les particules restantes coalesçant au cours de la circulation de ladite phase partiellement séparée dans la deuxième zone annulaire s'agglomérant sur la paroi interne de la pièce tubulaire (3), les particules ayant coalescé sur les parois internes de la pièce tubulaire externe (1) et de la pièce tubulaire interne (3) étant drainées vers la partie inférieure du dispositif alors que le reste de la phase continue est évacué par le conduit 9.

7. Procédé selon l'une des revendications 1 à 6, caractérisé en ce qu'il comporte plusieurs étapes de séparation en série, chacune de ces étapes permettant de séparer une fraction de la phase dispersée (II) contenue sous forme de gouttes au départ dans le mélange.

8. Procédé selon l'une des revendications 1 à 7, caractérisé en ce que l'on applique entre les pièces délimitant une zone annulaire (5) une différence de potentiel continue pour générer le champ électrique.

9. Procédé selon l'une des revendications 1 à 8, caractérisé en ce que l'on applique entre les pièces délimitant une zone annulaire (5) une différence de potentiel alternative pour générer le champ électrique.

10. Procédé selon l'une des revendications 1 à 9, caractérisé en ce que l'on applique entre les pièces délimitant une zone annulaire (5) une différence de potentiel de signe constant et variant de manière périodique.

11. Procédé selon l'une des revendications 1 à 9, caractérisé en ce que la valeur de crête du champ électrique établi au sein de chaque zone annulaire (5) est comprise entre 3.10⁴ et 6.10⁵ V/m.

12. Procédé selon l'une des revendications 1 à 11, caractérisé en ce que la vitesse moyenne d'écoulement dans chaque zone annulaire (5) est comprise entre 1 et 10 m/s.

13. Procédé selon l'une des revendications, 1 à 12 caractérisé en ce que les particules de phase dispersée ayant partiellement coalescé, sortant de chaque zone annulaire (5) sont séparées de la phase continue par centrifugation statique

14. Dispositif pour séparer un mélange composé d'au moins une phase continue (I) et d'au moins une phase conductrice (II) dispersée sous forme de particules telles que des gouttes dans une phase continue, les deux phases ayant des densités différentes l'une de l'autre, comportant au moins deux pièces sensiblement cylindriques (1, 3), imbriquées l'une dans l'autre et délimitant entre elles une zone annulaire (5), des moyens pour appliquer entre les deux pièces sensiblement cylindriques (1, 3) une différence de potentiel capable de provoquer la coalescence des particules de la phase dispersée (II), caractérisé en ce qu'il comporte des moyens d'introduction tangentiels (6, 7) du mélange à séparer à la périphérie d'au moins une des pièces cylindriques, disposés de manière à communiquer au mélange un mouvement de rotation et créer une force centrifuge, des moyens de réception et de décantation (4), lesdits moyens de réception et de décantation étant distincts de la zone annulaire (5), des moyens d'évacuation (8, 9) de la phase continue et des particules coalescées et séparées à l'intérieur desdits moyens de réception et de décantation.

15. Dispositif selon la revendication 14 caractérisé en ce que les moyens d'évacuation de la phase continue (I) et de la phase conductrice dispersée (II) partiellement séparées sont situés à des positions différentes

16. Dispositif selon la revendication 14, caractérisé en ce que lesdites pièces sensiblement cylindriques comportent une pièce tubulaire externe (1) et une pièce interne (3), lesdites pièces étant coaxiales.

17. Dispositif selon la revendication 15 caractérisée en ce que la pièce interne (3) est une pièce tubulaire formant un conduit (9) permettant l'évacuation de la phase continue (I).

18. Dispositif selon l'une des revendications 16 à 17, caractérisé en ce que l'électrode cylindrique interne est recouverte d'un matériau isolant tel qu'un polymère.

19. Dispositif selon l'une des revendications 14 à 18, caractérisé en ce qu'il comporte une pluralité de pièces coaxiales jouant le rôle d'électrodes, délimitant une pluralité de zones annulaires et des moyens pour appliquer entre deux quelconques électrodes adjacentes délimitant une zone annulaire une différence de potentiel capable de provoquer la coalescence des gouttes de la phase conductrice dispersée (II).

20. Dispositif selon la revendication 19, caractérisé en ce qu'il comporte des moyens d'introduction en parallèle du mélange à séparer dans les zones annulaires, lesdits moyens étant situés en périphérie de chacune des zones annulaires et selon une direction sensiblement tangente à la périphérie de chacune des zones annulaires, et à une même extrémité du dispositif.

21. Dispositif selon la revendication 19, caractérisé en ce la sortie d'une zone annulaire communique avec l'entrée de la zone annulaire suivante adjacente de manière à ce que le mélange à séparer parcourt successivement les zones annulaires.

22. Dispositif selon l'une des revendications 16 à 21, caractérisé en ce que l'on dispose une grille à proximité de la paroi interne de la pièce interne de manière à stabiliser le film formé par les gouttes ayant coalescé sur ladite paroi.

23. Dispositif selon l'une des revendications 14 à 22, caractérisé en ce que les moyens de réception et de séparation comportent une pièce conique (44) à l'intérieur de laquelle la phase formée par les gouttes ayant coalescé entraînée par la phase continue (I), est séparée par centrifugation hydrocyclonique.

24. Dispositif selon l'une des revendications 14 à 22, caractérisé en ce qu'il comporte un moyen de détection (14) du niveau de l'interface entre les phases (I) et (II) partiellement séparées, de manière maintenir ce niveau entre deux valeurs données.

25. Application selon l'une des revendications de procédé ou de dispositif (1 à 24 ) à la séparation d'un mélange tel qu'un effluent pétrolier contenant une phase aqueuse dispersée.

26. Application selon la revendication 25 au dessalage de pétrole brut comportant l'addition d'eau relativement peu salée.

## Patentansprüche

1. Verfahren zum Trennen eines aus wenigstens einer kontinuierlichen Phase (I) und wenigstens einer leitenden Phase (II), dispergiert in Form von Partikeln wie Tröpfchen in der kontinuierlichen Phase zusammengesetzten Gemisches, wobei die beiden Phasen von unterschiedlicher Dichte zueinander sind, wobei man das zu trennende Gemisch in wenigstens eine Ringzone (5) leitet, welche durch wenigstens zwei im wesentlichen zylindrische Teile (1, 3), die ineinander verschachtelt sind, begrenzt ist, man wenigstens eine Potentialdifferenz zwischen diesen beiden im wesentlichen zylindrischen Teilen (1, 3) derart anlegt, daß ein elektrisches Radialfeld in der Ringzone (5) hervorgerufen wird, dadurch gekennzeichnet, daß gleichzeitig mit dem Anlegen der Potentialdifferenz zwischen den beiden zylindrischen Teilen, das es ermöglicht, die Koaleszenz der Partikel der dispergierten Phase (2) zu begünstigen man das Gemisch gegen den Umfang wenigstens eines der im wesentlichen zylindrischen Teile tangential einführt, um dem Fluid in der Ringzone eine Rotationsbewegung zu erteilen und eine Zentrifugalkraft zu erhalten, die es ermöglicht, wenigstens partiell die koaleszierten Partikel der kontinuierlichen Phase unter dem Einfluß der Zentrifugalkraft, die im Inneren der ringförmigen Zone herrscht, zu trennen, wobei die kontinuierliche Phase und die dispergierte Phase die koalesziert habenden Partikel umfaßt, welche getrennt außerhalb der Ringzone gesammelt werden.

2. Verfahren nach Anspruch 1, dadurch gekennzeichnet, daß man das Gemisch tangential zum Umfang wenigstens eines der im wesentlichen zylindrischen Teile einführt.

3. Verfahren nach Anspruch 1, dadurch gekennzeichnet, daß man das zu trennende Gemisch in einer Vielzahl von Ringzonen, die zwischen den röhrenförmigen koaxialen Teilen angeordnet sind, zirkulieren läßt.

4. Verfahren nach Anspruch 3, dadurch gekennzeichnet, daß man Gemisch gleichzeitig in mehrere Ringzonen injiziert.

5. Verfahren nach Anspruch 3, dadurch gekennzeichnet, daß man das Gemisch nacheinander in unterschiedlichen Ringzonen zirkulieren läßt.

6. Verfahren nach Anspruch 5, dadurch gekennzeichnet, daß man das zu trennende Gemisch in diese erste Ringzone (5) leitet, die durch ein äußeres röhrenförmiges Teil (1) und ein inneres röhrenförmiges Teil (3) begrenzt ist, wobei diese Teile im wesentlichen koaxial sind, wo es eine erste Trennung erfährt, während der die Partikel, die koalesziert sind, sich gegen den Umfang des röhrenförmigen äußeren Teils (1) agglomerieren, die partiell getrennte kontinuierliche Phase in eine zweite durch das Ringteil (3) und eine mittige Elektrode in einer Richtung begrenzte Zone, die insgesamt der Zirkulationsrichtung des Gemisches in der ersten Zone (5) entgegengesetzt ist, übergeht, die verbleibenden Partikel, die während der Zirkulation dieser teilweise getrennten Phase in der zweiten Ringzone auf der Innenwand des röhrenförmigen Teils (3) koaleszieren, agglomerieren, und die Partikel, die auf der Innenwandung des röhrenförmigen äußeren Teils (1) und des röhrenförmigen inneren Teils (3) koalesziert haben, gegen den unteren Teil der Vorrichtung abgezogen werden, während der Rest der kontinuierlichen Phase über die Leitung 9 abgezogen wird.

7. Verfahren nach einem der Ansprüche 1 bis 6, dadurch gekennzeichnet, daß es mehrere Trennstufen in Reihe umfaßt, wobei jede dieser Stufen es ermöglicht, eine Fraktion der dispergierten Phase (II), die zu Beginn im Gemisch in Form von Tröpfchen enthalten war, abzutrennen.

8. Verfahren nach einem der Ansprüche 1 bis 7, dadurch gekennzeichnet, daß man zwischen den eine Ringzone (5) begrenzenden Teilen eine kontinuierliche Potentialdifferenz zur Erzeugung des elektrischen Feldes anlegt.

9. Verfahren nach einem der Ansprüche 1 bis 8, dadurch gekennzeichnet, daß man zwischen den eine Ringzone (5) begrenzenden Teilen eine alternative Potentialdifferenz zur Erzeugung des elektrischen Feldes anlegt.

10. Verfahren nach einem der Ansprüche 1 bis 9, dadurch gekennzeichnet, daß man zwischen den eine Ringzone (5) begrenzenden Teilen eine Potentialdifferenz konstanten Vorzeichens, das periodisch sich ändert, anlegt.

11. Verfahren nach einem der Ansprüche 1 bis 9, dadurch gekennzeichnet, daß der Maximumwert des mitten in jeder Ringzone (5) aufgebauten elektrischen Feldes zwischen 3.10⁴ und 6.10⁵ V/m beträgt.

12. Verfahren nach einem der Ansprüche 1 bis 11, dadurch gekennzeichnet, daß die mittlere Strömungsgeschwindigkeit in jeder Ringzone (5) zwischen 1 und 10 m/s beträgt.

13. Verfahren nach einem der Ansprüche 1 bis 12, dadurch gekennzeichnet, daß die Partikel dispergierter teilweise koalesziert habender Phase, die aus jeder Ringzone (5) austreten, von der kontinuierlichen Phase durch statisches Zentrifugieren getrennt werden.

14. Vorrichtung zum Trennen eines aus wenigstens einer kontinuierlichen Phase (I) und wenigstens einer leitenden Phase (II) dispergiert in Form von Partikeln wie Tröpfchen in einer kontinuierlichen Phase, zusammengesetzten Gemisches, wobei die beiden Phasen unterschiedliche Dichten zueinander haben und wenigstens zwei im wesentlichen zylindrische Teile (1, 3), die ineinander eingeschachtelt sind, aufweisen und untereinander eine Ringzone (5) begrenzen, Mittel zum Anlegen zwischen den beiden im wesentlichen zylindrischen Teilen (1, 3) einer Potentialdifferenz, die in der Lage ist, die Koaleszenz der Partikel der dispergierten Phase (II) hervorzurufen, dadurch gekennzeichnet, daß sie Mittel zum tangentialen Einführen (6, 7) des zu trennenden Gemisches an den Umfang wenigstens eines der zylindrischen Teile umfaßt, die derart angeordnet sind, daß dem Gemisch eine Drehbewegung erteilt und Zentrifugalkraft hervorgerufen wird, Mittel zum Sammeln und zum Dekantieren (4), wobei diese Sammlungs- und Dekantierungsmittel unterschiedlich zur Ringzone (5) sind, Mittel (8, 9) zum Abziehen der kontinuierlichen Phase und der koaleszierten Partikel, die im Inneren dieser Sammel- und Dekantierungsmittel getrennt sind.

15. Vorrichtung nach Anspruch 14, dadurch gekennzeichnet, daß die Mittel zum Abzug der kontinuierlichen Phase (I) und der leitenden dispergierten Phase (II), teilweise getrennt, an unterschiedlichen Positionen angeordnet sind.

16. Vorrichtung nach Anspruch 14, dadurch gekennzeichnet, daß die im wesentlichen zylindrischen Teile ein röhrenförmiges Außenteil (1) und einen Innenteil (3) umfassen, wobei die Teile koaxial sind.

17. Vorrichtung nach Anspruch 15, dadurch gekennzeichnet, daß das Innenteil (3) und ein eine Leitung (9) bildendes Ringteil den Abzug der kontinuierlichen Phase (I) gestatten.

18. Vorrichtung nach einem der Ansprüche 16 bis 17, dadurch gekennzeichnet, daß die zylindrische Innenelektrode von einem isolierendem Material, beispielsweise einem Polymer bedeckt ist.

19. Vorrichtung nach einem der Ansprüche 14 bis 18, dadurch gekennzeichnet, daß sie eine Vielzahl koaxialer Teile umfaßt, die die Rolle von Elektroden spielen und eine Vielzahl von Ringzonen begrenzen sowie Mittel, um zwischen zwei beliebigen benachbarten Elektroden, die eine Ringzone begrenzen, eine Potentialdifferenz anlegen, die in der Lage ist, die Koaleszenz der Tröpfchen der leitenden dispergierten Phase (II) hervorzurufen.

20. Vorrichtung nach Anspruch 19, dadurch gekennzeichnet, daß sie Mittel zum parallelen Einführen des zu trennenden Gemisches in die Ringzonen umfassen, wobei diese Mittel am Umfang jeder der Ringzonen und gemäß einer Richtung, die im wesentlichen tangential zum Umfang der Ringzonen verläuft und an ein und dem gleichen Ende der Vorrichtung angeordnet sind.

21. Vorrichtung nach Anspruch 19, dadurch gekennzeichnet, daß der Ausgang einer Ringzone mit dem Eingang der nachfolgenden benachbarten Ringzonen derart in Verbindung steht, daß das zu trennende Gemisch nacheinander die Ringzonen durchströmt.

22. Vorrichtung nach einem der Ansprüche 16 bis 21, dadurch gekennzeichnet, daß man ein Gitter benachbarter Innenwand des Innenteils anordnet, derart, daß der durch die auf dieser Wand koalesziert habender Tröpfchen gebildete Film, stabilisiert wird.

23. Vorrichtung nach einem der Ansprüche 14 bis 22, dadurch gekennzeichnet, daß die Mittel zum Sammeln und Trennen ein konisches Teil (44) umfassen, in dessen Inneren die durch die koalesziert habenden Tröpfchen gebildete Phase, die von der kontinuierlichen Phase (I) mitgerissen wird, durch hydrozyklonartiges Zentrifugieren abgetrennt wird.

24. Vorrichtung nach einem der Ansprüche 14 bis 22, dadurch gekennzeichnet, daß sie ein Mittel zum Erfassen (14) des Niveaus der Grenzfläche zwischen den Phasen (I) und (II), die teilweise getrennt sind, derart umfaßt, daß dieses Niveau zwischen zwei gegebenen Werten aufrechterhalten wird.

25. Anwendung einer der Verfahrens- oder Vorrichtungsansprüche (1 bis 24) auf die Trennung eines Gemisches beispielsweise eines einer wässrige dispergierte Phase enthaltenden Erdölabstroms.

26. Anwendung nach Anspruch 25 auf die Entsalzung von Rohöl, die die Zugabe von relativ wenig gesalzenem Wasser umfaßt.

## Claims

1. A method for separating a mixture consisting of at least one continuous phase (I) and at least one conductive phase (II) dispersed in the continuous phase in the form of particles such as drops, the densities of the two phases being different from one another, in which the mixture to be separated is fed into at least one annular zone (5), said annular zone being delimited by at least two substantially cylindrical parts (1, 3), one inserted inside the other, a potential difference is applied between said substantially cylindrical parts (1, 3) in order to create a radial electric field in the annular zone (5), characterised in that at the same time as the potential difference is applied between the two cylindrical parts to enhance the coalescence of particles of disperse phase (II), the mixture is introduced at a tangent towards the periphery of at least one of the substantially cylindrical parts in order to impart a rotary motion to the fluid in the annular zone and produce a centrifugal force which will allow the coalesced particles to be at least partially separated from the continuous phase under the effect of the centrifugal force prevailing within the annular zone, the continuous phase and the disperse phase containing the coalesced particles being collected separately outside of the annular zone.

2. A method as claimed in claim 1, characterised in that the mixture is introduced at a tangent at the periphery of at least one of the substantially cylindrical parts.

3. A method as claimed in claim 1, characterised in that the mixture to be separated is circulated in a plurality of annular zones located between coaxial tubular parts.

4. A method as claimed in claim 3, characterised in that the mixture is injected into several annular zones simultaneously.

5. A method as claimed in claim 3, characterised in that the mixture is successively circulated in different annular zones.

6. A method as claimed in claim 5, characterised in that the mixture to be separated is circulated in said first annular zone (5) delimited by an external tubular part (1) and an internal tubular part (3), said parts being substantially coaxial, where it is subjected to a first separation during which the partially coalesced particles agglomerate at the periphery of the external tubular part (1), the partially separated continuous phase passes into a second annular zone, delimited by the tubular part (3) and a central electrode, in an overall direction opposite to the direction in which the mixture is being circulated in the first zone (5), whilst the remaining particles which coalesce whilst said partially separated phase is circulated in the second annular zone agglomerate on the internal wall of the tubular part (3) and the particles that have coalesced on the internal walls of the external tubular part (1) and the internal tubular part (3) drain down to the lower part of the device whilst the continuous phase is discharged through the passage 9.

7. A method as claimed in one of claims 1 to 6, characterised in that it incorporates several separation steps in series, each of these steps allowing a fraction of the disperse phase (II) initially contained in the mixture in the form of drops to be separated.

8. A method as claimed in one of claims 1 to 7, characterised in that a continuous potential difference is applied between the parts delimiting an annular zone (5) in order to generate the electric field.

9. A method as claimed in one of claims 1 to 8, characterised in that an alternating potential difference is applied between the parts delimiting an annular zone (5) in order to generate the electric field.

10. A method as claimed in one of claims 1 to 9, characterised in that a periodically varying potential difference of constant sign is applied between the parts delimiting an annular zone (5).

11. A method as claimed in one of claims 1 to 9, characterised in that the peak value of the electric field established within each annular zone (5) is within the range between 3.10⁴ and 6.10⁵ V/m.

12. A method as claimed in one of claims 1 to 11, characterised in that the average flow velocity in each annular zone (5) is within the range between 1 and 10 m/s.

13. A method as claimed in one of claims 1 to 12, characterised in that the partially coalesced particles of disperse phase leaving each annular zone (5) are separated from the continuous phase by static centrifugation.

14. A device for separating a mixture consisting of at least one continuous phase (I) and at least one conductive phase (II) dispersed in a continuous phase in the form of particles such as drops, the densities of the two phases being different from one another, having at least two substantially cylindrical parts (1, 3) inserted one inside the other and delimiting an annular zone (5) between them, means for applying between the substantially cylindrical parts (1, 3) a potential difference capable of causing the particles of the disperse phase (II) to coalesce, characterised in that it has means (6, 7) for introducing the mixture to be separated at a tangent at the periphery of at least one of the cylindrical parts, arranged so as to impart a rotary motion to the mixture and create a centrifugal force, receiving and decanting means (4), said receiving and decanting mans being arranged apart from the annular zone (5) and means for discharging (8, 9) the continuous phase and the particles that have coalesced and separated inside said receiving and decanting means.

15. A device as claimed in claim 14, characterised in that the means for discharging the partially separated continuous phase (I) and conductive disperse phase are located at different positions.

16. A device as claimed in claim 14, characterised in that said substantially cylindrical parts are an external tubular part (1) and an internal part (3), said parts being coaxial.

17. A device as claimed in claim 15, characterised in that the internal part (3) is a tubular part forming a passage (9) through which the continuous phase (I) can be discharged.

18. A device as claimed in one of claims 16 to 17, characterised in that the internal cylindrical electrode is coated with an insulating material such as a polymer.

19. A device as claimed in one of claims 14 to 18, characterised in that it has a plurality of coaxial parts fulfilling the function of electrodes delimiting a plurality of annular zones and means for applying between any two adjacent electrodes delimiting an annular zone a potential difference capable of causing the drops of the conductive disperse phase (II) to coalesce.

20. A device as claimed in claim 19, characterised in that it has means for introducing the mixture to be separated into the annular zones in parallel, said means being located at the periphery of each of the annular zones, and in a direction essentially at a tangent to the periphery of each of the annular zones and at a same end of the device.

21. A device as claimed in claim 19, characterised in that the outlet of an annular zone communicates with the inlet of the next adjacent annular zone so that the mixture to be separated passes through the annular zones in succession.

22. A device as claimed in one of claims 16 to 21, characterised in that a grid is arranged close to the internal wall of the internal part in order to stabilise the film formed by the drops that have coalesced on said wall.

23. A device as claimed in one of claims 14 to 22, characterised in that the receiving and separating means have a conical part (44) inside which the phase formed by the coalesced drops entrained by the continuous phase (I) is separated by means of hydro-cyclonic centrifugation.

24. A device as claimed in one of claims 14 to 22, characterised in that it has a means for detecting (14) the level of the interface between the partially separated phases (I) and (II) so that this level can be maintained between two given values.

25. Application as claimed in one of the method or device claims (1 to 24) to the process of separating a mixture such as a petroleum effluent containing a dispersed aqueous phase.

26. Application as claimed in claim 25 to the desalting of crude oil involving the admixture of water with a relatively low salt content.
